# EUROPEAN PATENT APPLICATION

(11) **EP 1 788 773 A1**
(43) Date of publication of application: **23.05.2007**
(21) Application number: 05292478.4
(22) Date of filing: 18.11.2005
(51) Int. Cl.: H04L 29/06

(54) **Method and apparatuses to request delivery of a media asset and to establish a token in advance**

(71) Applicant: Alcatel Lucent, 75008 Paris (FR)
(72) Inventor: Kisel, Andrey, Berkshire SL6 8DH (GB); Robinson, David Cecil, Aldbourne Wiltshire SN8 2NP (GB)
(74) Representative: Narmon, Gisèle Marie Thérèse

(57) **Abstract**

In requesting delivery of an on-demand media asset from α media server (102) - like a request to stream a movie from α video-on-demand server - the client (101) submits to the media server (102) α token that is in advance associated with the requested media asset. The media server (102) then verifies the token against token related metadata credentials- e.g. maximum number of deliveries, expiry date, etc. - before granting the request and executing the requested operation, for example delivery of the media asset to the client (101).

## Description

### Field of the Invention

The present invention generally relates to a method to request delivery of a media asset in an on-demand network, for instance a process executed between a client's device (e.g. set-top box or STB) and a media-on-demand server to request the delivery of a media asset. Delivery requests in the context of this patent application could be but are not necessarily limited to requests to initiate a media session. In the example of video-on-demand, a delivery request could for instance be a request to start playout of a movie, but could also be a request to pause the movie, a request to stop playout of the movie, a request to restart playout of the movie from a particular position inside the movie, etc. The invention generally resolves the problem of asset-level protection of the media-on-demand server against denial-of-service (DoS) attacks.

### Background of the Invention

Existing methods to request delivery of on-demand media, offering some protection against unauthorized access or DoS attacks can generally be divided in two groups.

The first group of solutions is based on restricting access to the media-on-demand server (e.g. the VoD server) to a particular subset of users, for instance those residing in a sub-area of the network. Only users from the given sub-area are allowed to access the media-on-demand server.

This group of solutions offers very weak protection since any user that belongs to the subset can gain unlimited access to the media server. In addition, there is always a pool of valid, unused addresses that form part of the subset and are vulnerable to stealing by simple try-and-error techniques. Moreover, this group of solutions does not offer any asset level protection, which implies that all assets (e.g. all movies or TV programs) stored in the media-on-demand server can be requested after gaining access.

The second group of solutions relies on a client's signature in all media delivery requests. Typically, the signature consists of a secret and/or public key.

This second category of solutions is weak against an attack based upon stealing the key or already signed media delivery requests. In case the key gets stolen, an attacker can use the key to gain access as valid key holder, requesting an unlimited number of media deliveries until the key is blocked. This is called a denial of service (DoS) attack. Indeed, if a signed request is stolen by listening to the unprotected network traffic, an attacker can reuse the key for unlimited number of requests until the key gets blocked. Just like the first group of solutions, the second category does not implement any asset level protection. A single stolen key can be used to request delivery of all media assets stored on the media-on-demand server where the stolen key provides access to. The stolen signed media delivery request can be reused in a similar way for unlimited number of times until the key used to sign it is blocked.

Summarizing, all existing solutions are weak against denial of service attacks (an unlimited number of delivery requests validly penetrates the media server) and do not offer asset level protection (all assets stored on the media server that is penetrated can be requested). It is an object of the present invention to disclose a mechanism for requesting delivery of on-demand assets that does not suffer from these drawbacks of the prior art solutions.

### Summary of the Invention

According to the invention, the above described disadvantages of the prior art solutions are overcome through a method to request delivery of on-demand media as defined in claim 1, wherein the client submits to the media server a token that is in advance associated with the requested media asset, and wherein the media server verifies the token against token related metadata before delivery of the requested media asset.

The current invention further consists in providing a client device, a media server and an application server adapted to perform the method of claim 1. Such client device, media server and application server are defined by claims 14 to 17 respectively.

Thus, the basic idea of the current invention is to use an authentication token or a ticket for authorization of asset level delivery. The token is in advance associated with a particular media asset (e.g. a specific movie stored on the VoD server) and may further be associated with token related metadata like the maximum number of media deliveries, the expiry date, the maximum duration of a single media delivery, etc. The token or ticket has to be used for signing all client media delivery requests.

Firstly, by associating the token with a particular media asset, the method according to the current invention provides asset level protection. Even if the token gets stolen, the attacker will not get access to other media assets stored on the same media server as the one where the token grants access to.

Secondly, by verifying the token against certain token related metadata such as the maximum number of playouts, start and expiry times, the maximum duration of a playout, etc., the method according to the present invention protects the media server against denial of service (DoS) attacks. If any of the restrictions contained in the metadata is violated, the media delivery session will be terminated and the client has to request new authorization for delivery of the media asset (a new ticket must be requested to the application server generating the tickets or tokens).

Possible, the token according to the present invention consists of an ID and signature as defined in claim 2. In this case the application server creates an instance of the ticket in the media server's metadata storage and returns a ticket number (the ID) and the ticket's key (the signature) to the client.

As defined by claim 3, the ticket may be generated by a dedicated application server in charge of the creation of media asset related tokens.

As defined by claim 4, the ticket upon being created might be stored in the media server which keeps the asset where the token is associated with. The media server thereto may be equipped with a metadata storage wherein both the ticket and its associated metadata are stored. An advantage of storing the ticket and its associated metadata in the media server is that there is no need for the media server to make time consuming requests to an external ticketing authority for the verification process.

The metadata associated with a ticket according to the present invention may consists of a selection of limitations or parameters like the maximum number of deliveries of the media asset possible with the ticket, the expiry date/time of the ticket, the maximum duration of a media delivery with the ticket, etc. This is for instance expressed by claims 5 to 7.

In an embodiment of the invention, the client may submit the token after being requested or challenged by the media server, as defined by claim 8.

As indicated by claims 9 to 12, a media delivery request according to the invention should be interpreted broadly and might for instance cover a request for playout, a request for restart, a request for stopping or pausing the playout, etc.

### Brief Description of the Drawings

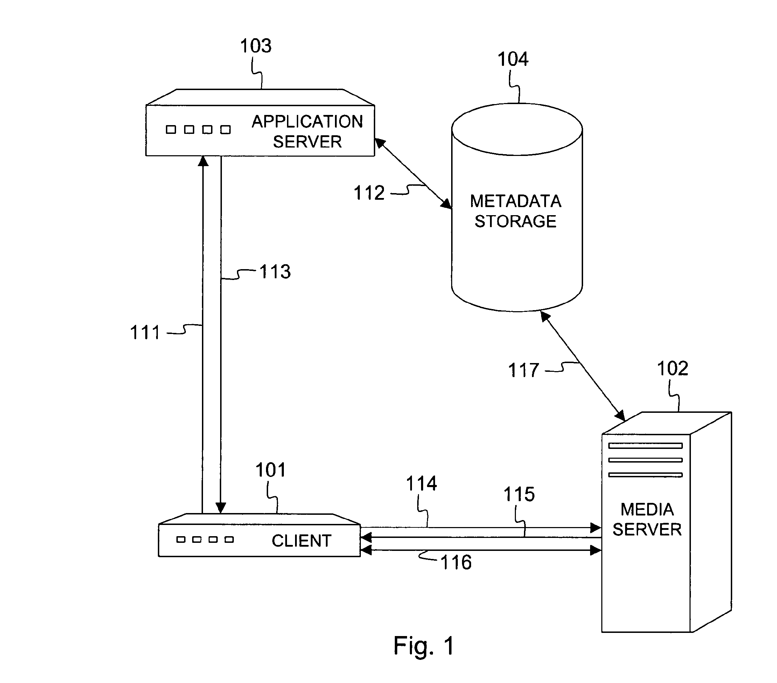

Fig. 1 illustrates a video-on-demand network wherein an embodiment of the method to request delivery of a media asset, i.e. a movie or TV show, is implemented according to the present invention.

### Detailed Description of Embodiment(s)

Fig. 1 shows a video-on-demand (VoD) network wherein a client device 101 is connected to a media server 102 and an application server 103. The client device 101 could for instance be a set-top box (STB), a personal computer (PC), a television set (TV) or a video decoder, located at the customer premises for receiving TV programs or media assets via a downlink and displaying those TV programs or assets to the viewer. The client device 101 typically can receive instructions from the viewer, e.g. through a remote control, and is able to forward those instructions on the uplink towards the media server 102 or application server 103. Eventually, those viewer instructions are first interpreted in the client device 101 and encoded for instance into RTSP (Real-Time Streaming Protocol) format or - depending on the nature of the on-demand media service - variant request protocol formats like SIP (Session Initiation Protocol), ITU's H.323 protocol, HTTP (Hypertext Transfer Protocol), IGMP (Internet Group Management Protocol). The uplink and downlink from and to the client device 101 typically share a common medium, like for instance a twisted copper pair in case ADSL (Asymmetric Digital Subscriber Line) or VDSL (Very High Speed Digital Subscriber Line) technology is used for the first mile access, or a coaxial cable or optical fiber in case alternative access technologies like DOCSIS cable access, HFC (Hybrid Fiber Coax) or PON (Passive Optical Network) are deployed in the first mile access network. The media server 102 is a video server that stores all media assets or TV programs that are available on demand to the viewers. Note that this media server 102, although represented by a single box in Fig. 1 may correspond to a distributed video-on-demand server consisting of networked server nodes (hierarchically or not) that each store certain TV programs or fragments of TV programs, and that cooperate in order to reconstitute a TV program and deliver it to the client upon request. Fig. 1 further shows a metadata storage 104 which may or may not be integrated with the video server 102, but which at least is operationally coupled with the video server 102. It is further noted that also the application server 103 represents the abstraction layer that contains knowledge on the location and accessibility of video servers like 102, location of clients like 101. Typically there will be one such application server, serving multiple video servers, and integrating functionality like billing, tracking client activity, keeping snapshots of video servers, keeping snapshots of video programs that are available through the different media servers, etc.

The following paragraphs will describe the process of sequential steps that is followed by the client 101, video server 102, application server 103 and metadata storage 104 in order to request delivery of a TV program according to the current invention. The process consists of the sequential steps illustrated by the arrows 111, 112, 113, 114, 115, 116 and 117 in Fig. 1.

Initially, the client 101 requests a list of available media assets, i.e. available on-demand movies, TV programs, etc. from the application server 103. The application server 103 has knowledge on the location of the client and accessibility of the media servers, so initial requests will always be sent to the application server 103. The list enables the viewer to select a media asset to be requested. This process of requesting a list of available assets, and selecting a video asset is not shown in Fig. 1.

After selecting a media asset, the client 101 requests the application server 103 to generate a ticket (or token) authorizing media delivery instead of just requesting delivery from the media server. This request is referenced by 111 in Fig. 1. As an example, the client 101 may send an RTSP SETUP request to the application server 103 to request playout of the chosen video asset. The application server 103 will interpret this RTSP message as a request to generate a ticket authorizing playout of that particular video asset. As an alternative to RTSP, HTTP or any other standard or proprietary protocol could be used.

Upon receipt of the client's request 111, the application server 103 will contact the metadata storage 104 to have a ticket generated. This may be done using XML, SQL or any other standard or proprietary technology or protocol. The metadata storage 104 might for instance be a highly available Oracle database that serves as a centralized location to issue tickets for assets made available through various video servers. The instance of the ticket created in the metadata storage 104 for example comprises a unique number (the ticket ID), the asset name identifying the selected video asset for which the ticket is valid, start and expiry times of the ticket, maximum number of playouts allowed using the ticket, maximum duration of a single playout using the ticket, and a random key (the ticket signature). This is referenced by 112 in Fig. 1.

Thereupon, the application server 103 returns the ticket number (or ticket ID) and the ticket key (or ticket signature) for the selected video asset to the client 101. This corresponds to step 113 in Fig. 1 which may again rely on the RTSP or HTTP protocol by way of example.

As indicated by 114 in Fig. 4, the client 101 then requests unauthorized delivery of the video asset from the video server 102. This initial request to deliver the selected video asset can be realized by sending an RTSP SETUP message from the client 101 to the video server 102. Note that the client 101 may use the same or a different request protocol for the communication with the media server 102 and the foregoing communication with the application server 103.

The media server 102 rejects this initial, unauthorized request and asks the client 101 to sign a supplied challenge, referenced by 115 in Fig. 1, with the ticket key. This challenge is a randomly generated identifier that helps to avoid hijacking the session. For each new request, a new challenge will be issued. The client is asked to encrypt the challenge with its secret key. In other words, the client 101 is asked to sign its request with the secret ticket key and to supply the ID of the ticket associated with the media asset.

In the normal operation mode, the client 101 signs the challenge using the secret ticket key and supplies the ticket number to the video server 102 in step 116.

The media server 102 then verifies the ticket credentials, i.e. the signature and limitations for the given ticket number in step 117. The video server 102 thereto loads the secret ticket key from the metadata storage 104, verifies the signed response 116 received from the client 101, and checks that the ticket restrictions memorized locally from the metadata storage (e.g. the expiry date of the ticket, the maximum number of playouts for the ticket, ...) are not violated. In case response 116 is signed with the appropriate secret key and in case no ticket restrictions are violated, the media server 102 acknowledges to the client 101 successful request for delivery of the video asset and optionally issues a new challenge for the next request. The client 101 repeats step 116 and the video server 102 repeats step 117 for all subsequent requests.

An important, innovative aspect of the current invention is that during signature verification in step 117, the video server 102 always checks that the ticket restrictions such as the maximum number of playouts for the ticket, the start and expiry time of the ticket and the maximum duration of the playout are not violated for every VCR style control request (e.g. play, pause, fast-forward, rewind, stop, re-start). If any of the restrictions is violated, the video delivery session is terminated and the client 101 has to request new authorization for video asset delivery (request a new ticket) from the application server 103. The whole sequence in this case restarts from step 111.

Unlike existing solutions, the method according to the current invention can clearly guarantee asset level protection and withstand denial of service attacks when either the key or a signed request is stolen.

Asset level protection is ensured by using the ticket ID and key to authorize playout of a single piece of asset. When the key and the ticket number are stolen, they would not help to authorize delivery of another video asset apart from the asset for which the ticket has been issued.

Denial of service attack protection in case of a stolen key is guaranteed by restricting the ticket to a maximum number of deliveries and a maximum length of a single delivery.

For example, if a ticket's key is stolen and cloned, it will expire after authorizing only a small number of new video delivery requests. When a single video delivery session is attempted with unlimited number of trickplay operations (play, pause, fast-forward, rewind, ...), the delivery will be terminated once the maximum session time is reached.

The method according to the current invention further can guarantee protection against denial of service attacks when a signed request is stolen. This is so because each new request has to be signed using the previous challenge issued by the video server 102. The likelihood of the video server 102 repeating the same challenge twice is negligible. Thus, an attempt to reuse the same signed request would be detected and discarded.

Yet another advantage of the method according to the current invention is the efficiency of the ticket validation process, in particular in case the metadata storage 104 is integrated in the media server 102. Because the ticket metadata (e.g. expiry time, maximum number of playouts, maximum duration of a single playout) is generated in advance and stored in the media server's metadata storage 104, there is no need for the media server 102 to make time consuming requests to an external ticketing authority for ticket verification, hence improving efficiency.

Summarizing, the media server according to the current invention uses a ticket to authorize each and every media delivery, the ticket being linked to a particular media asset in advance. This way, it provides asset level protection. The media server further preferably applies a number of restrictions associated with the ticket. The media server preferably also requires supplying the ticket ID for every media delivery operation, so not only at the initial stage of delivery session setup. This way, it withstands denial of service attacks.

Although the present invention has been illustrated by reference to a specific embodiment, i.e. the above described video-on-demand system, it will be apparent to those skilled in the art that various changes and modifications may be made within the spirit and scope of the invention. It is therefore contemplated to cover any and all modifications, variations or equivalents that fall within the spirit and scope of the basic underlying principles disclosed and claimed in this patent application. For example the invention could be applied with equal advantages in any media-on-demand delivery system and is thus not restricted to VoD or NVoD systems. The metadata associated with a ticket may vary and may be dependent on the nature of the assets delivered in the system. Whereas the maximum number of deliveries and the maximum time for a single delivery may be appropriate metadata for a ticket associated with a video asset, the metadata associated with a software asset, games, or other on-demand retrievable assets may be completely different. As already mentioned above, applicability of the invention is not restricted to the use of particular protocols like RTSP, HTTP, SIP, H.323, XML, SQL, or modified versions thereof. Further some architectural choices made above are optional: for instance the application server and the media server may or may not be integrated, the metadata storage may or may not form part of the media server, the media server may be replaced with a cluster of servers, etc.

## Claims

1. A method for a client (101) to request delivery of a media asset to a media server (102) in an on-demand network,
**CHARACTERIZED in that** said client (101) submits a token in advance associated with said media asset to said media server (102), and said media server (102) verifies said token against token related metadata before delivery of said media asset.

2. A method according to claim 1,
**CHARACTERIZED IN THAT** said token comprises a token ID and a token signature.

3. A method according to claim 1,
**CHARACTERIZED IN THAT** said token is generated and associated with said media asset in advance by an application server (103).

4. A method according to claim 1,
**CHARACTERIZED IN THAT** said token related metadata are stored in advance in said media server (102).

5. A method according to claim 1,
**CHARACTERIZED IN THAT** said token related metadata comprise a maximum number of deliveries.

6. A method according to claim 1,
**CHARACTERIZED IN THAT** said token related metadata comprise an expiry date.

7. A method according to claim 1,
**CHARACTERIZED IN THAT** said token related metadata comprise a maximum duration of a single media delivery.

8. A method according to claim 1,
**CHARACTERIZED IN THAT** said client (101) submits said token upon challenge by said media server (102).

9. A method according to claim 1,
**CHARACTERIZED IN THAT** requesting delivery of a media asset entails requesting playout of said media asset.

10. A method according to claim 1,
**CHARACTERIZED IN THAT** requesting delivery of a media asset entails requesting restart of said media asset.

11. A method according to claim 1,
**CHARACTERIZED IN THAT** requesting delivery of a media asset entails requesting stopping playout of said media asset.

12. A method according to claim 1,
**CHARACTERIZED IN THAT** requesting delivery of a media asset entails requesting pausing playout of said media asset.

13. A method according to claim 1,
**CHARACTERIZED IN THAT** said media asset is a video asset or a picture asset or a game asset or a music asset.

14. A media server (102) for use in an on-demand network, able to handle a request from a client (101) for delivery of a media asset, and to deliver said media asset to said client (101),
**CHARACTERIZED IN THAT**
said media server (102) comprises:
a. receiving means for receiving a token from said client (101) when requesting delivery of said media asset, said token being associated in advance with said media asset; and
b. verification means for verifying said token against token related metadata before delivery of said media asset.

15. A media server (102) according to claim 14,
**CHARACTERIZED IN THAT** said media server further comprises:
c. storage means (104) for storing said token related metadata.

16. An application server (103) for use in an on-demand network, able to receive a request from a client (101) for delivery of a media asset,
**CHARACTERIZED IN THAT**
said application server (103) is operationally coupled to:
a. token generating means for generating a token and for associating said token in advance with said media asset; and
said application server (103) comprises:
b. token sharing means for sharing said token with said client (101).

17. A client device (101) for use in an on-demand network, said client device (101) being able to request delivery of a media asset to a media server (102),
**CHARACTERIZED IN THAT** said client device (101) further comprises:
a. means for requesting a token in advance associated with said media asset to an application server (103); and
b. means for submitting said token with said media server (102) when requesting delivery of said media asset.
